# EUROPÄISCHE PATENTSCHRIFT

(11) **EP 0 499 949 B1**
(45) Veröffentlichungstag und Bekanntmachung des Hinweises auf die Patenterteilung: **26.04.1995**
(21) Anmeldenummer: 92102263.8
(22) Anmeldetag: 11.02.1992
(51) Int. Cl.: B60R 22/36

(54) **Verfahren zur Montage eines Sicherheitsgurtaufrollers**
Method for mounting a safety belt retractor
Méthode pour monter un enrouler de ceinture de sécurité

(30) Priorität: 22.02.1991 DE 9102117 U
(43) Veröffentlichungstag der Anmeldung: 26.08.1992
(73) Patentinhaber: TRW Occupant Restraint Systems GmbH, 73553 Alfdorf (DE)
(72) Erfinder: Kielwein, Thomas, D-7071 Eschach (DE); Schmid, Johannes, D-7070 Schwäbisch Gmünd-Hussenhofen (DE)
(74) Vertreter: Degwert, Hartmut, Dipl.-Phys.

(56) Entgegenhaltungen:
- EP-A- 0 140 553
- DD-A- 215 505
- DE-A- 3 418 378
- DE-A- 3 440 698

## Beschreibung

Die Erfindung betrifft ein Verfahren zur Montage eines Sicherheitsgurtaufrollers mit fahrzeugsensitivem und/oder gurtbandsensitivem Sperrmechanismus, dessen Ansteuersystem von einer auf eine Seite des lasttragenden Aufrollergehäuses aufgesetzten und mittels Rastelementen an diesem befestigten Abdeckkappe umgeben ist und eine drehfest an die Aufrollerwelle angeschlossene Steuerscheibe aufweist, wobei das Ansteuersystem mit seinen Funktionsteilen und der Abdeckkappe als vormontierte Baugruppe in Axialrichtung der Aufrollerwelle auf die Seitenplatte des Aufrollergehäuses aufgesetzt wird, die Steuerscheibe und die Aufrollerwelle, die mit komplementären Formschlußgestaltungen versehen sind, axial ineinandergeschoben werden, auf einer Montageplatte des Ansteuersystems Funktionsteile gelagert werden und wenigstens ein senkrecht zu der benachbarten Seitenplatte des Aufrollergehäuses abstehender Führungszapfen in eine Bohrung der Seitenplatte eingesetzt wird. Ein Sicherheitsgurtaufroller dieser Bauform ist aus der DD-A-215505 bekannt. Das lasttragende Aufrollergehäuse besteht im allgemeinen aus einem O-förmigen Blechteil, das am Fahrzeugaufbau befestigt wird. Auf die eine Seite dieses Aufrollergehäuses wird die Aufrollerfeder aufgesetzt und von einer Abdeckkappe umgeben; auf der gegenüberliegenden Seite des Aufrollergehäuses wird das Ansteuersystem des Sperrmechanismus aufgebaut. Das Ansteuersystem besteht aus einer Anzahl von Funktionsteilen, die in der richtigen Reihenfolge und Position eingebaut werden müssen. Für die Montage des Ansteuersystems an dem Aufrollergehäuse sind mehrere mit großer Sorgfalt durchzuführende Montageschritte erforderlich.

Der Erfindung liegt die Aufgabe zugrunde, bei einem Sicherheitsgurtaufroller der angegebenen Art die Montage des Ansteuersystems am Aufrollergehäuse erheblich zu vereinfachen.

Diese Aufgabe wird bei einem Sicherheitsgurtaufroller der oben angegebenen Art erfindungsgemäß dadurch gelöst, daß die Montageplatte mit den daran gelagerten Funktionsteilen ihrerseits als vormontierte Baugruppe formschlüssig in die Abdeckkappe eingesetzt und in dieser verrastet wird.

Dieses Verfahren eröffnet die Möglichkeit einer vollautomatischen Montage des Sicherheitsgurtaufrollers. Die vormontierte Baugruppe wird einfach an das Aufrollergehäuse herangeführt, in Axialrichtung der Aufrollerwelle auf die Seitenfläche des Aufrollergehäuses aufgesetzt und mit dieser verrastet. Alle bei diesem Vorgang miteinander in Eingriff gelangenden Teile werden selbsttätig ausgerichtet.

Das Ansteuersystem wird mit einer Montageplatte versehen, auf der zumindest einige Funktionsteile des Ansteuersystems gelagert werden; die Montageplatte wird formschlüssig in die Abdeckkappe eingesetzt. Wenigstens ein senkrecht zu der benachbarten Seite des Aufrollergehäuses abstehender Führungszapfen greift formschlüssig in eine Bohrung des Aufrollergehäuses ein. Da die Montageplatte in der Abdeckkappe formschlüssig gehalten wird, sind alle Funktionsteile zwischen Montageplatte und Abdeckkappe gesichert und geschützt. Der Führungszapfen gewährleistet eine selbsttätige Ausrichtung der Montageplatte an der Seitenfläche des Aufrollergehäuses.

Eine weitere Vereinfachung der Montage ergibt sich dadurch, daß eine gesonderte Befestigung der Montageplatte am Aufrollergehäuse entfallen kann, wenn diese Montageplatte durch die mit dem Aufrollergehäuse durch Rastelemente verbundene Abdeckkappe an diesem festgelegt ist. Es entfallen dann die üblicherweise notwendigen Schraub-, Niet- oder Preßverbindungen.

Von besonderem Vorteil ist auch, daß die vormontierte Baugruppe eine Überprüfung der Funktion des Auslösemechanismus bereits vor der Montage am Gurtaufroller ermöglicht. Insbesondere können die fahrzeugsensitiven und gurtbandsensitiven Beschleunigungswerte sowie der Sensor-Kippwinkel in der Baugruppe selbst und unabhängig vom Gurtaufroller überprüft werden.

Weitere Merkmale und Vorteile der Erfindung ergeben sich aus der folgenden Beschreibung und aus der Zeichnung, auf die Bezug genommen wird. In der Zeichnung zeigen:

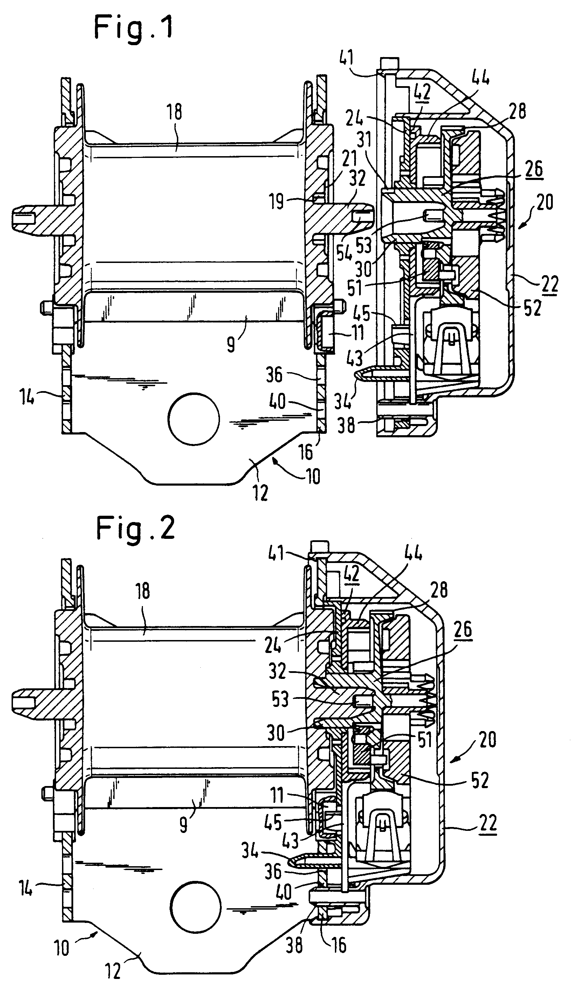

- Fig. 1: einen radialen Querschnitt eines Aufrollergehäuses mit Aufrollerwelle und einer vormontierten, den Auslösemechanismus beinhaltenden Baugruppe unmittelbar vor ihrer Montage am Aufrollergehäuse;
- Fig. 2: eine analoge Schnittansicht der am Aufrollergehäuse montierten Baugruppe; und

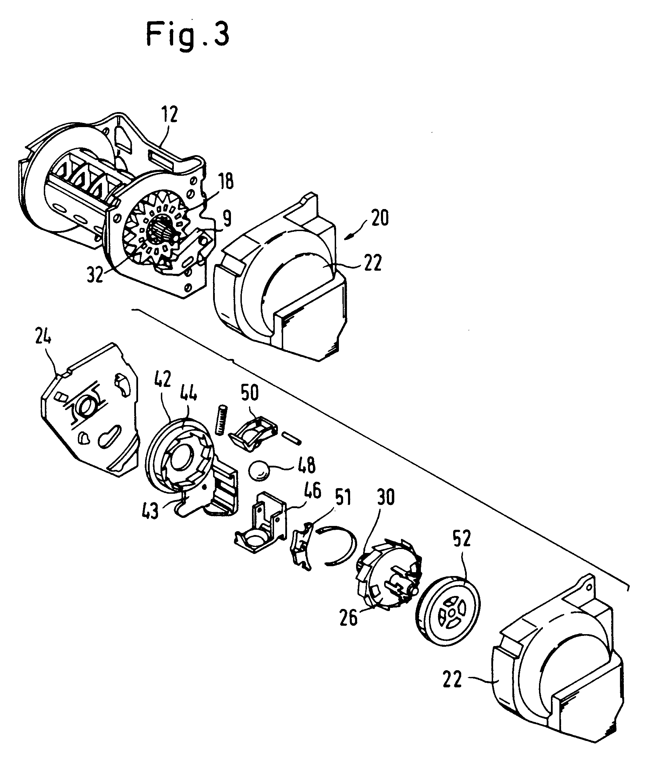

- Fig. 3: eine auseinandergezogene Perspektivansicht zur Veranschaulichung der Montage des Sicherheitsgurtaufrollers.

Das lasttragende Aufrollergehäuse 10 besteht aus einer Basisplatte 12 und zwei rechtwinklig abgebogenen Seitenplatten 14, 16, zwischen denen eine Aufrollerwelle 18 drehbar und eine Sperrklinke 9 verschwenkbar gelagert sind. Auf die Seite der Seitenplatte 14 wird von außen eine Aufrollerfeder mit einer Abdeckkappe aufgesetzt (nicht gezeigt). Auf die gegenüberliegende Seitenplatte 16 wird eine vormontierte Baugruppe 20 aufgesetzt, die das Ansteuersystem des fahrzeugsensitiven und gurtbandsensitiven Sperrmechanismus beinhaltet. Dieser Auslösemechanismus ist von an sich bekannter Bauart und wird daher hier nur kurz beschrieben.

Die Baugruppe 20 besteht aus einer Abdeckkappe 22, einer darin formschlüssig aufgenommenen und gehaltenen Montageplatte 24 und verschiedenen Funktionsteilen des Ansteuersystems, die auf der dem Inneren der Abdeckkappe 22 zugewandten Seite der Montageplatte 24 aufgebaut und gelagert sind. Zu diesen Funktionsteilen gehört insbesondere eine Steuerscheibe 26, die an ihrem Außenumfang eine Steuerverzahnung 28 aufweist und mit einer hohlzylindrischen Nabe 30 durch eine Bohrung der Montageplatte 24 zur Aufrollerwelle 18 hin herausragt. Die Nabe 30 ist in ihrem Inneren mit Formschlußgestaltungen in Form von axialen Keilverzahnungselementen versehen, die passend zu entsprechenden Keilverzahnungselementen auf einem axialen Mitnehmerzapfen 32 der Aufrollerwelle 18 ausgebildet sind. Der Mitnehmerzapfen 32 ist an seinem freien Ende verjüngt; die Nabe 30 ist hingegen an ihrem der Aufrollerwelle 18 zugewandten Ende aufgeweitet. Die Nabe 30 weist an ihrem freien Ende eine Außenverzahnung 31 auf, die zum Eingriff in eine entsprechende Verzahnung 19 in einer Ringnut 21 an der gegenüberliegenden Stirnfläche der Aufrollerwelle 18 bestimmt ist.

Auf ihrer der Seitenplatte 16 zugewandten Seite ist die Montageplatte 24 mit einem senkrecht abstehenden Führungszapfen 34 versehen, der an seinem freien Ende verjüngt ist und zum formschlüssigen Eingriff in eine gegenüberliegende Bohrung 36 des Seitenteils 16 bestimmt ist. Die Abdeckkappe 22 ist mit angeformten Führungselementen 38 versehen, die zum Eingreifen in passend geformte, gegenüberliegende Bohrungen 40 der Seitenplatte 16 bestimmt sind. Auf einem großen Teil ihres Umfangs ist die Abdeckkappe 22 mit einer durchgehenden Rastleiste 41 versehen, die dazu bestimmt ist, die Innenseite dem Seitenplatte 16 zu hintergreifen und eine Rastverbindung zwischen der Seitenplatte 16 und der Abdeckkappe 22 herzustellen. Zugleich bildet die Rastleiste 41 eine Abdichtung des Innenraums der Abdeckkappe 22, so daß die darin aufgenommenen Funktionsteile des Ansteuersystems geschützt sind.

Die Montageplatte 24 mit den daran gelagerten Funktionsteilen bildet ihrerseits eine vorgefertigte Baugruppe. Diese Baugruppe wird einfach in das Innere der Abdeckkappe 22 eingesetzt; die Abdeckkappe 22 ist in ihrem Inneren mit Wandungsteilen versehen, die Anschläge zur Positionierung und formschlüssigen Aufnahme der Montageplatte 24 bilden. Ferner sind Rastelemente an der Abdeckkappe 22 angeformt, welche die Montageplatte 24 hintergreifen und in der Abdeckkappe sichern.

Zu den auf der Montageplatte 24 aufgebauten Funktionsteilen gehören außer der bereits erwähnten Steuerscheibe 26 ein Betätigungsteil 42, das begrenzt verschwenkbar an der Montageplatte 24 gelagert ist und einen Betätigungsarm 43 zum Angreifen an der Sperrklinke 9 aufweist, mit einem innenverzahnten Ansteuerring 44, der axial neben der Steuerscheibe 26 angeordnet ist, ein fahrzeugsensitiver Trägheitssensor mit einem am Betätigungsteil 42 gelagerten Gehäuse 46, einer darin gelagerten Massekugel 48 und einem Steuerhebel 50, der mit der Außenverzahnung der Steuerscheibe 26 zusammenwirkt, eine an der Innenseite der Steuerscheibe 26 schwenkbar gelagerte Mitnehmerklinke 51, die mit der Innenverzahnung des Ansteuerrings 44 zusammenwirkt, und eine gurtbandsensitive Massescheibe 52, die mit der Steuerscheibe 26 gekoppelt ist.

Nachdem diese Funktionsteile des Ansteuersystems auf der Montageplatte 24 aufgebaut sind, wird die so entstandene vorgefertigte Baugruppe in die Abdeckkappe 22 eingeführt und unter Ausübung eines geringen Drucks bis gegen die Anschläge der Abdeckkappe 22 geschoben, wobei die Rastelemente der Abdeckkappe 22 hinter der Montageplatte 24 einschnappen. Die so entstandene vormontierte Baugruppe 20 wird nun an die Seitenplatte 16 des Aufrollergehäuses 10 in Axialrichtung der Aufrollerwelle 18 herangeführt, wobei der Führungszapfen 34 in die Bohrung 36 und der Mitnehmerzapfen 32 in das Innere der Nabe 30 der Steuerscheibe 26 eingreift. Bei weiterer Annäherung der Baugruppe 20 an die Seitenplatte 16 greift auch das Führungselement 38 in die Bohrung 40 ein.

Nachdem die Keilverzahnungselemente am Mitnehmerzapfen 32 und an der Nabe 30 der Steuerscheibe 26 miteinander in Eingriff gelangt sind, ist die Steuerscheibe 26 drehfest mit der Aufrollerwelle 18 gekoppelt. Eine Feinlagerung der Aufrollerwelle 18 ergibt sich dadurch, daß ein Führungszapfen 52, der koaxial und im radialen Abstand von den Keilverzahnungselementen in das Innere der Nabe 30 hineinragt, in eine entsprechende axiale Bohrung 54 des Mitnehmerzapfens 32 der Aufrollerwelle 18 nahezu spielfrei eingreift. Die Ausrichtung der Aufrollerwelle 18 und der Steuerscheibe 26 zueinander erfolgt durch Eingriff der Außenverzahnung 31 am Ende der Nabe 30 in die Verzahnung 19 der Ringnut 21. Zugleich greift der Betätigungsarm 43 über einen seitlichen Zapfen 45 in eine gegenüberliegende Aussparung 11 der Sperrklinke 9 ein.

Sobald die Rastleiste 41 mit dem Außenumfang der Seitenplatte 16 in Berührung kommt, wird sie nach außen umgebogen und gleitet auf der Schmalseite der Seitenplatte, bis sie über die Innenkante der Schmalseite hinausgelangt und auf der Rückseite der Seitenplatte 16 verrastet. Die vormontierte Baugruppe 20 ist nunmehr an der Seitenplatte 16 des Aufrollergehäuses 10 gesichert.

Es ist somit ersichtlich, daß die Montage der vorgefertigten Baugruppe 20 am Aufrollergehäuse 10 ein einfacher Vorgang ist, der lediglich das Heranführen und Aufdrücken auf die Seitenplatte 16 bis zum Verrasten an dieser beinhaltet. Es erfolgt dabei eine selbsttätige Ausrichtung aller miteinander in Eingriff gelangender Teile.

## Patentansprüche

1. Verfahren zur Montage eines Sicherheitsgurtaufrollers mit fahrzeugsensitivem und/oder gurtbandsensitivem Sperrmechanismus, dessen Ansteuersystem von einer auf eine Seitenplatte (16) des lasttragenden Aufrollergehäuses (10) aufgesetzten und mittels Rastelementen an dieser befestigten Abdeckkappe (22) umgeben ist und eine drehfest an die Aufrollerwelle (18) angeschlossene Steuerscheibe (26) aufweist, wobei das Ansteuersystem mit seinen Funktionsteilen und der Abdeckkappe (22) als vormontierte Baugruppe in Axialrichtung der Aufrollerwelle (18) auf die Seitenplatte (16) des Aufrollergehäuses (10) aufgesetzt wird, die Steuerscheibe (26) und die Aufrollerwelle (18), die mit komplementären Formschlußgestaltungen versehen sind, axial ineinandergeschoben werden, auf einer Montageplatte (24) des Ansteuersystems Funktionsteile (42, 26, 52) gelagert werden und wenigstens ein senkrecht zu der benachbarten Seitenplatte (16) des Aufrollergehäuses (10) abstehender Führungszapfen (34) in eine Bohrung (36) der Seitenplatte (16) eingesetzt wird, **dadurch gekennzeichnet,** daß die Montageplatte (24) mit den daran gelagerten Funktionsteilen ihrerseits als vormontierte Baugruppe formschlüssig in die Abdeckkappe (22) eingesetzt und in dieser verrastet wird.

2. Verfahren nach Anspruch 1, **dadurch gekennzeichnet,** daß der Führungszapfen (34) an seinem freien Ende verjüngt ist.

3. Verfahren nach Anspruch 1 oder 2, **dadurch gekennzeichnet,** daß die Montageplatte (24) durch die mit dem Aufrollergehäuse (10) durch Rastelemente verbundene Abdeckkappe (22) an diesem festgelegt wird.

4. Verfahren nach einem der vorstehenden Ansprüche, **dadurch gekennzeichnet,** daß die eine der Formschlußgestaltungen an ihrem der anderen Zugewandten axialen Ende verjüngt und die andere radial aufgeweitet ist.

5. Verfahren nach einem der vorstehenden Ansprüche, **dadurch gekennzeichnet,** daß die Formschlußelemente der Steuerscheibe (26) durch axiale Keilverzahnungselemente im Inneren einer Nabe (30) und die Formschlußelemente der Aufrollerwelle (18) durch axiale Keilverzahnungselemente auf einem axialen Mitnehmerzapfen (32) gebildet werden und daß die Nabe (30) zusätzlich mit einem koaxialen, im radialen Abstand von ihren Keilverzahnungselementen gelegenen Führungszapfen (53) versehen wird, der in eine axiale Bohrung (54) des Mitnehmerzapfens (32) eingesetzt wird.

6. Verfahren nach Anspruch 5, **dadurch gekennzeichnet,** daß eine Verzahnung (31) am freien Ende der Nabe (30) mit einer entsprechenden Verzahnung (19) an der gegenüberliegenden Stirnfläche der Aufrollerwelle (18) in Eingriff gebracht wird.

7. Verfahren nach einem der vorstehenden Ansprüche, **dadurch gekennzeichnet,** daß das Ansteuersystem einen Betätigungsarm (43) für eine Sperrklinke (9) aufweist, die am Aufrollergehäuse (10) schwenkbar gelagert ist, und daß ein zur Sperrklinke (9) gerichteter seitlicher Zapfen (45) des Betätigungsarms (43) mit einer gegenüberliegenden Aussparung (11) der Sperrklinke (9) in Eingriff gebracht wird.

## Claims

1. Method for mounting a safety belt retractor having a vehicle-sensitive and/or webbing-sensitive blocking mechanism, the control system of which is surrounded by a cover cap (22) placed onto one side plate (16) of the loadbearing retractor housing (10) and secured to the latter by means of detent elements and has a control disc (26) connected non-rotatably to the retractor shaft (18), wherein the control system with its functional parts and the cover cap (22) is placed as preassembled assembly in the axial direction of the retractor shaft (18) onto the side plate (16) of the retractor housing (10), and the control disc (26) and the retractor shaft (18) provided with complementary form-locking configurations are pushed axially into each other, and wherein functional parts (42, 26, 52) are mounted at a mounting plate (24) of the control system and wherein at least one guide pin (34) projecting perpendicularly to the adjacent side plate (16) of the retractor housing (10) is inserted into a bore (36) of the side plate (16), characterized in that the mounting plate (24) with the functional parts mounted thereon is itself inserted as preassembled assembly into the cover cap (22) in form-locking manner and is locked therein.

2. Method according to claim 1, characterized in that the guide pin (34) is tapered at its free end.

3. Method according to claim 1 or claim 2, characterized in that the mounting plate (24) is secured to the retractor housing (10) by the cover cap (22) connected to said housing by detent elements.

4. Method according to any one of the preceding claims, characterized in that one of the form-locking configurations is tapered at an axial end facing the other configuration and said other configuration is radially widened.

5. Method according to any one of the preceding claims, characterized in that the form-locking elements of the control disc (26) are formed by axial spline elements in the interior of a hub (30) and the form-locking elements of the retractor shaft (18) are formed by axial spline elements on an axial driver pin (32) and that the hub (30) is additionally provided with a coaxial guide pin (53) which is located radially spaced from the spline elements thereof and engages into an axial bore (54) of the driver pin (32).

6. Method according to claim 5, characterized in that the hub (30) comprises at its free end a toothing (31) which is engaged into a corresponding toothing (19) on the opposite end face of the retractor shaft (18).

7. Method according to any one of the preceding claims, characterized in that the control system comprises an actuating arm (43) for a blocking pawl (9) which is pivotally mounted on the retractor housing (10) and that the actuating arm (43) comprises a lateral pin (45) which is directed towards the blocking pawl (9) for engagement into an opposite recess (11) of the blocking pawl (9).

## Revendications

1. Procédé de montage d'un enrouleur de ceinture de sécurité, comprenant un mécanisme de blocage sensible au véhicule et/ou sensible à la ceinture de sécurité et dont le système d'attaque est entouré d'un chapeau de couverture (22) monté sur une plaque latérale (16) du boîtier (10) de l'enrouleur qui supporte la charge et fixé à cette plaque au moyen d'éléments à encliquetage, ledit système d'attaque comprenant un disque de commande (26) solidarisé en rotation avec l'arbre (18) de l'enrouleur, les pièces fonctionnelles du système d'attaque et le chapeau de couverture (22) formant un module préalablement monté et que l'on place dans la direction axiale de l'arbre (18) de l'enrouleur sur la plaque latérale (16) du boîtier (10) de l'enrouleur, le disque de commande (26) et l'arbre (18) de l'enrouleur, qui comportent des structures de fixation par complémentarité de formes, s'enclenchant axialement l'un dans l'autre, des pièces fonctionnelles (42, 26, 52) étant montées sur une plaque de montage (24) du système d'attaque et au moins une cheville de guidage (34) qui est saillante perpendiculairement à la plaque latérale voisine (16) du boîtier (10) de l'enrouleur se logeant dans un trou (36) de la plaque latérale (16), caractérisé en ce que la plaque de montage (24) ainsi que les pièces fonctionnelles montées sur elle forment de leur côté un module préalablement monté qui se loge par complémentarité de formes dans le chapeau de couverture (22) et s'enclenche dans ce dernier.

2. Procédé selon la revendication 1, caractérisé en ce que l'extrémité libre de la cheville de guidage (34) forme un rétrécissement.

3. Procédé selon la revendication 1 ou 2, caractérisé en ce que la plaque de montage (24) est fixée sur le boîtier (10) de l'enrouleur par le chapeau de couverture (22) qui est relié au boîtier (10) de l'enrouleur au moyen d'éléments à encliquetage.

4. Procédé selon l'une des revendications précédentes, caractérisé en ce que l'une des structures de fixation par complémentarité de formes se rétrécit à l'extrémité axiale tournée vers l'autre et l'autre structure s'élargit radialement.

5. Procédé selon l'une des revendications précédentes, caractérisé en ce que les éléments de fixation par complémentarité de formes du disque de commande (26) sont formés d'éléments axiaux de denture cunéiforme situés à l'intérieur d'un moyeu (30) et les éléments de fixation par complémentarité de formes de l'arbre (18) de l'enrouleur sont formés d'éléments axiaux de denture cunéiforme situés sur un bout d'arbre axial d'entraînement (32) et en ce que le moyeu (30) comprend de plus une cheville coaxiale de guidage (53) placée à distance radiale de ses éléments de denture cunéiforme et pénétrant dans un trou axial (54) du bout d'arbre d'entraînement (32).

6. Procédé selon la revendication 5, caractérisé en ce qu'une denture (31) située à l'extrémité libre du moyeu (30) est mise en prise avec une denture correspondante (19) de la surface extrême opposée de l'arbre (18) de l'enrouleur.

7. Procédé selon l'une des revendications précédentes, caractérisé en ce que le système d'attaque comprend un bras (43) d'actionnement d'un cliquet d'arrêt (9) qui est monté pivotant sur le boîtier (10) de l'enrouleur et en ce qu'une broche latérale (45) du bras d'actionnement (43) qui est orientée vers le cliquet d'arrêt (9) se met en prise avec un évidement opposé (11) du cliquet d'arrêt (9).
